(19) Europäisches Patentamt
European Patent Office
Office européen des brevets

(11) Veröffentlichungsnummer: **0 163 113**
**B1**

(12) **EUROPÄISCHE PATENTSCHRIFT**

(45) Veröffentlichungstag der Patentschrift: **27.06.90**

(21) Anmeldenummer: **85104862.9**

(22) Anmeldetag: **22.04.85**

(51) Int. Cl.$^5$: **C 09 B 69/04**, C 09 D 11/00, C 09 D 101/00

# (54) Farbsalze anionischer Farbstoffe.

(30) Priorität: **03.05.84 DE 3416327**
**15.09.84 DE 3433950**

(43) Veröffentlichungstag der Anmeldung:
**04.12.85 Patentblatt 85/49**

(45) Bekanntmachung des Hinweises auf die Patenterteilung:
**27.06.90 Patentblatt 90/26**

(84) Benannte Vertragsstaaten:
**CH DE FR GB IT LI**

(56) Entgegenhaltungen:
**EP-A-0 005 222**
**DE-A-1 952 534**
**DE-A-2 158 059**
**DE-C- 740 697**
**FR-A- 850 496**
**FR-A-2 009 830**
**FR-A-2 295 996**
**US-A-2 095 077**
**US-A-4 359 418**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Loeffler, Hermann**
**Haydnstrasse 23**
**D-6720 Speyer (DE)**
Erfinder: **Dyllick-Brenzinger, Rainer, Dr.**
**Weinheimer Strasse 44**
**D-6940 Weinheim (DE)**

**EP 0 163 113 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft Farbsalze anionischer Farbstoffe der Formel I

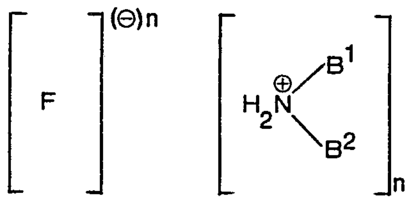

(I),

in der

n die Bedeutung von 1 oder 2,

$B^1$ und $B^2$ jeweils die Bedeutung des Restes

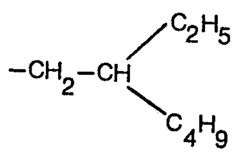

und

F die Bedeutung des Restes II oder III.

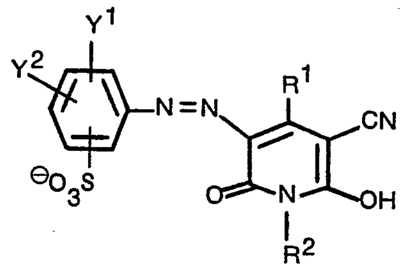

(II),

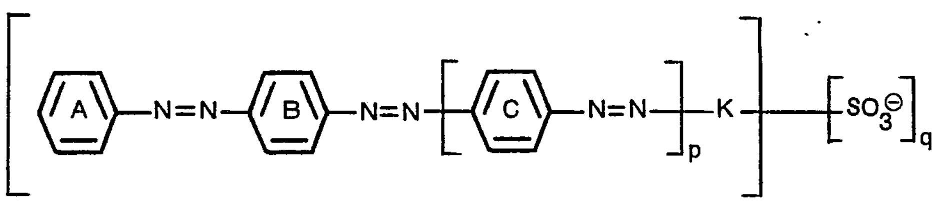

(III),

besitzen, wobei

die Ringe A, B und C noch substituiert sein können und

$R^1$ Wasserstoff, $C_1$- bis $C_3$-Alkyl, Hydroxi oder Hydroxisulfonylmethyl,

$R^2$ $C_1$- bis $C_8$-Alkyl, $C_2$- bis $C_7$-Hydroxialkyl oder $C_3$- bis $C_{11}$-Alkoxialkyl,

$Y^1$ Wasserstoff, Chlor, Brom, Methyl, Methoxi oder Hydroxisulfonyl,

$Y^2$ Wasserstoff, Chlor, Brom, Methyl oder Methoxi,

p 0 oder 1,

q 1 oder 2 und

K den Rest der Formel

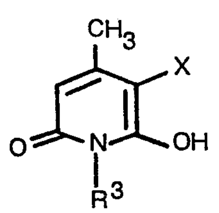

oder

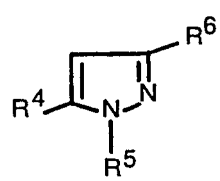

bedeuten, worin

X für Cyan oder Hydroxisulfonyl,

$R^3$ für Wasserstoff, $C_2$- bis $C_6$-Hydroxialkyl oder $C_4$- bis $C_8$-Hydroxialkoxialkyl,

$R^4$ für Methyl oder Hydroxi,

$R^5$ für Wasserstoff oder gegebenenfalls durch $Y^1$ und $Y^2$ substituiertes Phenyl und

$R^6$ für Methoxicarbonyl oder Ethoxicarbonyl stehen.

Die Ammoniumsalzbildung führt man so aus, daß man die Farbsäuren oder deren Alkalisalze in wäßriger oder wäßrig-organischer, homogener oder inhomogener Phase im pH-Bereich von 3 bis 7 und im Temperaturbereich von −20°C bis +80°C mit dem sekundären Amin umsetzt. Aus dem wäßrig-organischhomogenen Bereich wird das Reaktionsprodukt durch Filtration, aus dem wäßrig-zweiphasigen Reaktionsgemisch durch Phasentrennung und Abdampfen des organischen Lösungsmittels isoliert. Das Arbeiten in wäßrig organischen Mischungen ist dann von Vorteil, wenn die Salze des verwendeten Amins mit organischen Säuren oder mit Mineralsäuren nicht mehr wasserlöslich sind und insbesondere, wenn sie nicht mehr kristallisierende Öle bilden.

Die Verwendung des speziellen sekundären Amins zur Farbsalzbildung ist im Hinblick auf das gewünschte Eigenschaftsprofil — extrem hohe Lösichkeit in einer Vielzahl niedrig siedender organischer Lösungsmittel ohne Wärmezufuhr sowie Unlöslichkeit in Wasser — von besonderem Vorteil.

Da die Kristallisationstendenz der Farbsalze bei ihrer Bildung häufig sehr gering ist, sind zur Kristallisation Maßnahmen geeignet, welche die Kristallkeimbildung fördern, z.B. starke Kühlung, Reiben und ein Zusatz von Impfkristallen.

Die Farbsalze der Formel I sind flüssig, kristallin oder auch harzartig und zeichnen sich im Gegensatz zu den freien Säuren oder den Alkalisalzen durch eine generell extrem hohe Löslichkeit in organischen hydroxylgruppenhaltigen Lösungsmitteln, insbesondere in Alkoholen, Glykolen oder Glykolmonoethern sowie deren Mischungen mit niedrig siedenden Ketonen und Estern aus. Die Löslichkeit in reinen Ketonen und Estern ist konstitutionsabhängig und erreicht in vielen Fällen ebenfalls sehr hohe Werte, während sie sich in Aromaten, reinen Aliphaten und Wasser dem Wert 0 nähert.

Dies gestattet vorteilhaft die Verwendung der erfindungsgemäßen Farbsalze zum Färben polymerer Massen wie Celulose-2½- oder -triacetat. Insbesondere sind unter polymeren Massen solche zu verstehen, die als filmbildende, farbtragende Polymere die Oberflächen von Papier, Glas, Aluminium und Kunststoff veredeln oder mit deren Hilfe vorzugsweise im Flexodruck-Verfahren Oberflächen bedruckt werden. Es sind dies beispielsweise Nitro- und Ethylcellulose, Polyvinylchlorid, Polyvinylbutyral, Schellack, mit Phenol-Formaldehydharzen modifiziertes Collophonium, Polyamidharze, Kondensate des Formaldehyds mit Harnstoff und Melamin oder Polyacrylsäureharze. Die Applikationen der metallfreien Farbstoffe zeichnen sich dabei durch sehr gute Wasser- und Fettechtheiten aus bei Lichtechtheiten, die denen von Farbsalzen schwermetallhaltiger Komplexsäuren nahekommen oder sie erreichen.

Die neuen Farbstoffe zeichnen sich in der Regel zudem durch eine verbesserte Löslichkeit gegenüber den handelsüblichen Metallkomplexfarbstoffen aus.

In Formel II sind einzelne Reste $R^2$ neben den bereits genannten z.B. $CH_3$, $C_2H_5$, $C_3H_7$-(n) und -(i), $C_4H_9$-(n) und -(i), $CH(CH_3)C_2H_5$, $C_5H_{11}$-(n) und -(i), $CH_2C(CH_3)_3$, $C(CH_3)_2C_2H_5$, $C_6H_{13}$, $CH(CH_3)C_3H_7$, $CH(CH_3)CH(CH_3)_2$, $CH_2CH(CH_3)C_2H_5$, $CH_2CH(CH_3)CH(CH_3)_2$, $CH_2CH(C_2H_5)C_2H_5$, $CH_2CH(CH_3)C_3H_7$, $C_7H_{15}$, $CH(C_2H_5)C_4H_9$, $C_8H_{17}$, $CH_2CH(C_2H_5)C_4H_9$, $CH(CH_3)C_3H_6CH(CH_3)_2$, $C_2H_4OH$, $C_3H_6OH$, $C_4H_8OH$, $C_6H_{12}OH$, $C_2H_4OCH_3$, $C_2H_4OC_2H_5$, $C_2H_4OC_3H_7$, $C_2H_4OC_4H_9$, $C_2H_4CH(OCH_3)CH_3$, $C_3H_6OCH_3$, $C_3H_6OC_2H_5$, $C_3H_6OC_3H_7$ oder $C_3H_6OC_4H_9$.

Die als Ausgangsmaterialien für die Farbsalze der Formel I dienenden sauren Monoazofarbstoffe, wobei F der Formel II entspricht, sind bekannt. Ihre Herstellung erfolgt durch Kombination der Diazoniumsalze von Anilenen mit den Pyridonen der Formel IV

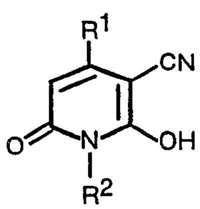

(IV)

in wäßrigem, stark saurem bis schwach alkalischem Milieu. Die Salzbildung geschieht nach dem oben beschriebenen allgemeinen Herstellungsschema.

Gegenüber den aus der EP—A—5 222 bekannten Farbsalzen zeichnen sich die vergleichbaren erfindungsgemäßen Farbsalze überraschenderweise durch eine viel höhere Löslichkeit aus.

Der Ring A in Formel III ist z.B. durch Fluor, Chlor Brom, Methyl, Methoxi, Ethoxi, Cyan, Nitro, Methylsulfonyl, Ethylsulfonyl, N,N-disubstituiertes Carbamoyl oder Sulfamoyl, $C_1$- bis $C_8$-Alkoxicarbonyl oder Hydroxisulfonyl substituiert.

Einzelne Diazokomponenten der Formel

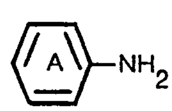

sind beispielsweise:

Anilin, 2-, 3- oder 4-Chloranilin, 2-, 3- oder 4-Nitroanilin, 2-, 3- oder 4-Methylanilin, 2-, 3- oder 4-Methoxianilin, Anilin-2-, -3- oder -4-sulfonsäure, 3- oder 4-Aminobenzoesäure, 2-, 3- oder 4-Aminobenzoesäuremethyl-, -ethyl- oder -butylester oder -dimethyl-, -diethyl- oder -dibutylamid, Anilin-3- oder -4-sulfonsäuredimethyl-, -diethyl- oder -dibutylamid oder die mehrfach substituierten Aniline der Formel:

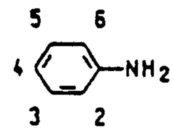

| 2 | 3 | 4 | 5 | 2 | 3 | 4 | 5 |
|---|---|---|---|---|---|---|---|
| $OCH_3$ | - | - | Cl | $OCH_3$ | - | $NO_2$ | $SO_3H$ |
| - | Cl | $OCH_3$ | - | - | - | $SO_3H$ | $CH_3$ |
| $OCH_3$ | - | $NO_2$ | - | $SO_3H$ | - | $CH_3$ | - |
| $OCH_3$ | - | - | $NO_2$ | $OCH_3$ | - | $SO_3H$ | - |
| $OCH_3$ | - | $OCH_3$ | - | - | $SO_3H$ | $OCH_3$ | - |
| $OCH_3$ | - | - | $OCH_3$ | $SO_3H$ | - | $OCH_3$ | - |
| $OCH_3$ | - | Cl | $CH_3$ | $SO_3H$ | - | - | $NHCOCH_3$ |
| $OCH_3$ | - | $OCH_3$ | Cl | $SO_3H$ | - | $NHCOCH_3$ | - |
| $OCH_3$ | - | Cl | $OCH_3$ | $CH_3$ | - | $SO_3H$ | $CH_3$ |
| $OCH_3$ | - | $NO_2$ | $CH_3$ | $CH_3$ | - | $CH_3$ | $SO_3H$ |
| $OCH_3$ | - | $NO_2$ | $OCH_3$ | | | | |
| $OCH_3$ | - | $CH_3$ | - | | | | |
| $CH_3$ | - | $OCH_3$ | - | | | | |
| $OCH_3$ | - | - | $CH_3$ | | | | |
| Cl | - | $SO_3H$ | Cl | | | | |
| Cl | - | $SO_3H$ | - | | | | |
| $SO_3H$ | - | - | Cl | | | | |
| $SO_3H$ | - | Cl | - | | | | |
| Cl | $SO_3H$ | - | - | | | | |
| - | $SO_3H$ | - | Cl | | | | |
| OH | $SO_3H$ | - | Cl | | | | |
| $NO_2$ | - | $SO_3H$ | - | | | | |
| $SO_3H$ | - | $NO_2$ | - | | | | |
| OH | $NO_2$ | - | $SO_3H$ | | | | |
| OH | $SO_3H$ | - | $NO_2$ | | | | |
| OH | - | $SO_3H$ | - | | | | |
| $SO_3H$ | - | $SO_3H$ | - | | | | |
| $SO_3H$ | - | - | $SO_3H$ | | | | |
| $SO_3H$ | - | Cl | $CH_3$ | | | | |
| $SO_3H$ | - | $CH_3$ | Cl | | | | |
| $CH_3$ | Cl | - | $SO_3H$ | | | | |
| $CH_3$ | - | $SO_3H$ | - | | | | |

Die Ringe B und C können z.B. durch Methyl, Ethyl, Methoxi, Ethoxi, Chlor, Brom, Nitro, Cyan oder Hydroxisulfonyl substituiert sein.

Einzelne bevorzugte Ringe B und C sind beispielsweise:

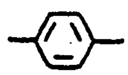 , 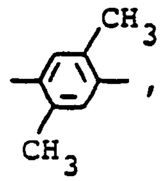 , 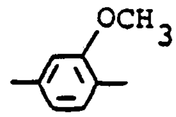 , 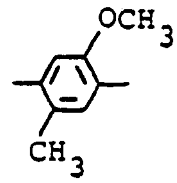 , 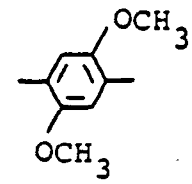 ,

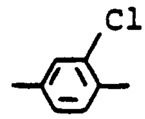 , 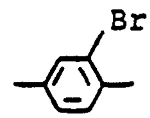 , 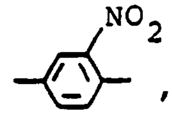 , 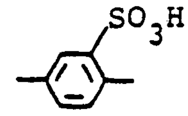 ,

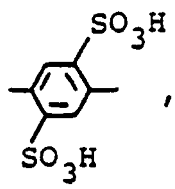 , 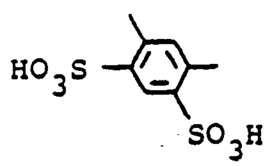 ,

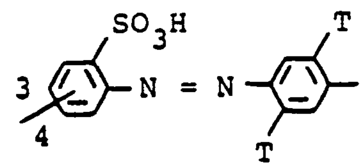 oder 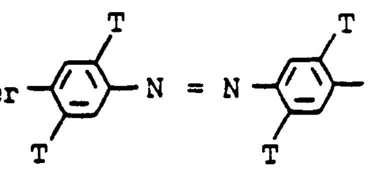 ,

wobei T Wasserstoff, Methyl oder Methoxi bedeuten.

Die als Ausgangsmaterialien für die Farbstoffe der Formel I, wobei F der Formel III entspricht, dienenden sauren Disazofarbstoffe sind bekannt. Die Trisazofarbstoffe werden durch Diazotierung von Aminodisazoderivaten und Umsetzung mit den Kupplungskomponenten erhalten. Diazotierung und Kupplung erfolgen bevorzugt in wäßrigem Milieu und bei Temperaturen von 0°C bis 40°C nach an sich bekannten Methoden. In den Fällen, in denen entweder die Diazoniumsalze oder die Kupplungsprodukte schwer wasserlöslich sind, ist es zweckmäßig, in Gegewart von Lösungsvermittlern wie Essigsäure, Dimethylformamid oder N-Methylpyrrolidon zu arbeiten.

Gegenüber den Disazofarbstoffen aus der US—A—4 359 418 haben die erfindungsgemäßen Farbstoffe den Vorteil einer um den Faktor 10 bis 100 höheren Löslichkeit, wodurch sie sich erst für den beschriebenen Anwendungsbereich eignen.

Bevorzugte Substituenten für die Ringe A, B und C sind neben Hydroxisulfonyl Methyl oder Methoxi.

In der DE—A—1 952 534 wird ein Sulfonsäuregruppen enthaltender Anthrachinonfarbstoff beschrieben, dessen Kation das Di(2-ethylhexyl)ammoniumion ist.

Weiterhin ist aus der FR—A—2 009 830 ein saurer Azofarbstoff bekannt, dessen Diazokomponente aus der Anilinreihe und dessen Kupplungskomponente aus der Naphthalinreihe stammt. Als Kation weist er ein Diisohexylammoniumion auf.

Einzelheiten der Herstellung können den Beispielen entnommen werden, in denen sich Angaben über Teile und Prozente, soweit nicht anders vermerkt, auf das Gewicht beziehen.

## Beispiel 1

39,2 Teile des aus Sulfanilsäure und 1-Propyl-2,2'-dihydroxi-3-cyan-4-methyl-pyridon-6 gebildeten Azofarbstoffes in Form der freien Säure werden in 750 Raumteilen Wasser von Raumtemperatur gelöst. Dazu fügt man 2 Teile eines Dispergiermittels, z.B. Emulan® OU, und stellt mit verdünnter Natronlauge einen pH-Wert von 5 ein. Zur Lösung des Natrium-Farbsalzes tropft man nun bei guter Rührung in etwa 1 1/2 Stunden die Lösung aus 27,5 Teilen Di-2-ethylhexylamin und einem Teil Emulan OU in 50 Raumteilen 80%iger Essigsäure zu. Das Reaktionsgemisch wird dann zur Vervollständigung der Kristallisation und der Reaktion zunächst 30 Minuten bei Raumtemperatur, dann eine Stunde bei 55/60°C und pH = 3,9 nachgerührt. Das ausgefallene Farbsalz der Formel

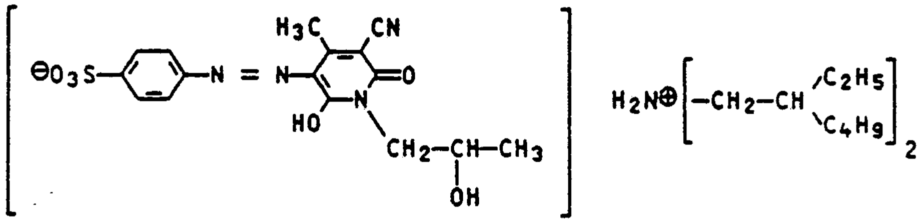

wird bei Raumtemperatur abgesaugt, mit Wasser gewaschen und bei 50°C im Vakuum getrocknet. Man erhält so ein gelbes Pulver, das sich in Ethanol von 20°C ($\lambda_{max}$. 434,5 nm) sowie in Mischungen von Ethanol mit niedrig siedenden Estern und Ketonen in sehr hohen Konzentrationen löst und in den gängigen Lacksystemen sehr gut für den Flexodruck geeignet ist.

Beispiel 2

43,8 Teile des Azofarbstoffes aus Sulfanilsäure und 1-(n)-Hexyl-2-hydroxi-3-cyan-4-methyl-pyridon-6 als Natriumsalz werden in 500 Raumteilen Wasser und 150 Raumteilen Essigester angerührt. Man versetzt mit Di-2-ethylhexylamin und Essigsäure wie in Beispiel 2, rührt eine Stunde bei 50°C nach und läßt absitzen. Die schwach gelb gefärbte wäßrige Phase wird abgelassen und die organische Farbstofflösung durch Destillation entwässert. Die erhaltene Lösung wird mit wenig Ethanol auf einen Gehalt von 50% des Farbstoffes der Formel

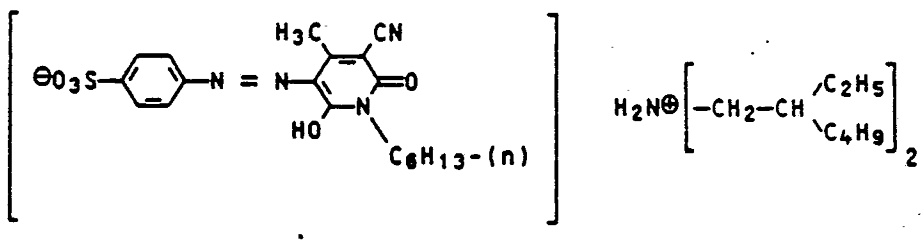

gebracht und eignet sich so zum Färben von Harzmassen, wie sie bei Lacksystemen für den Flexodruck üblich sind.

Nach dem Verfahren des Beispiels 1 sind, gegebenenfalls mit geringfügigen Änderungen von Temperatur und Zeit, wie sie die Kristallisationsgeschwindigkeit im Einzelfall erfordert, die Farbstoffe der folgenden Tabelle zu erhalten, die ein weitgehend gleiches Eigenschaftsprofil besitzen:

TABELLE 1

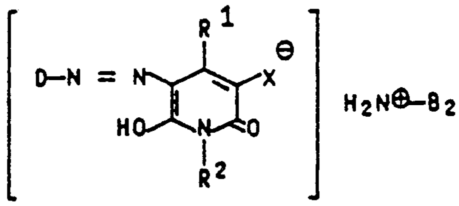

| Bsp.-Nr. | D | $R^1$ | X | $R^2$ | B | $\lambda_{max}$ |
|---|---|---|---|---|---|---|
| 3 | 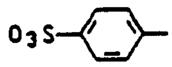 | $CH_3$ | CN | $CH_3$ | 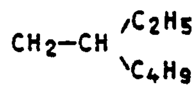 | 434,5 |
| 4 | " | " | " | $C_2H_5$ | " | 435 |
| 5 | " | " | " | $C_2H_4OH$ | " | 435 |
| 6 | 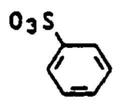 | " | " | $C_2H_5$ | " | 431 |
| 7 | 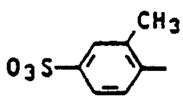 | " | " | $CH_3$ | " | 444 |
| 8 | " | " | " | 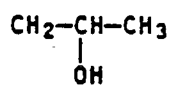 | " | 444 |
| 9 | " | " | " | $C_2H_4OCH_3$ | " | 444 |
| 10 | 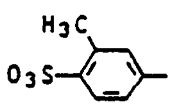 | " | " | 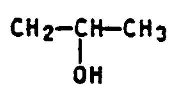 | " | 439 |
| 11 | " | " | " | $C_2H_4OCH_3$ | " | 439 |
| 12 | 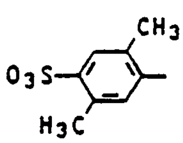 | " | " | 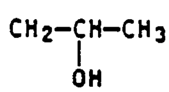 | " | 448,5 |
| 13 | " | " | " | $C_2H_5$ | " | 448,5 |
| 14 | 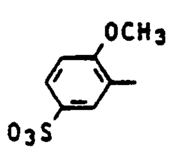 | " | " | $C_4H_9$ | " | 453,5 |

TABELLE 1 (Fortsetzung)

| Bsp.-Nr. | D | $R^1$ | X | $R^2$ | B | $\lambda_{max}$ |
|---|---|---|---|---|---|---|
| 15 | 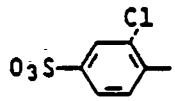 | $CH_3$ | CN | $CH_3$ | 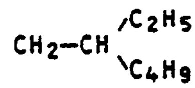 | 435 |
| 16 | 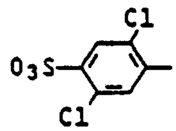 | " | " | $C_2H_5$ | " | 430,5 |
| 17 | " | " | " | $C_4H_9$ | " | 430,5 |
| 18 | 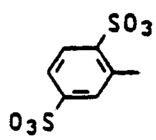 | " | " | $CH_3$ | " | 429 |
| 19 | 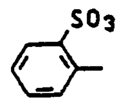 | " | " | $C_2H_5$ | " | 431 |
| 20 | " | " | " | $C_4H_9$ | " | 431 |

Beispiel 21

37,9 Teile 4-Aminoazobenzol-3,4'-disulfonsäure als Natrimsalz werden durch Anrühren in 150 Raumteilen Wasser aufgelöst. Nach Kühlung mit 150 Teilen Eis und Zusatz von 30 Raumteilen einer 33 normalen Natriumnitritlösung läßt man unter intensivem Rühren rasch 30 Raumteile einer 30%igen wäßrigen Salzsäure zufließen. Die Temperatur des Reaktionsgemisches steigt dabei von 0°C auf 15°C an und das Diazobetain kristallisiert kurz danach aus. Nach einstündigem Rühren bei 10 bis 15°C zerstört man die überschüssige salpetrige Säure mit wenig Amidosulfonsäure und läßt die Lösung der Kupplungskomponente zufließen, die durch Auflösen von 20 Teilen 1-(2-Hydroxi-ethyl)-3-cyan-4-methyl-2-hydroxi-pyridon-6 in 150 Raumteilen Wasser und 5,5 Raumteilen einer 50%igen Natronlauge bei pH ≈ 5 bereitet wurde. Nach 30 minütigem Rühren bei 15°C ist das Diazoniumsalz vollständig abreagiert. Man setzt nun im Vorab hergestellte Kristallisationskeime zu und läßt langsam 50 Teile Di-3-ethylhexylamin einlaufen, wobei durch Zugabe von 5 Raumteilen Essigsäure der pH-Wert von 4,2 eingehalten wird. Man rührt über Nacht bei Raumtemperatur, saugt ab, wäscht mit Wasser salzfrei und trocknet bei 50°C im Vakuum. Das so erhaltene orangefarbene Pulver entspricht der Formel

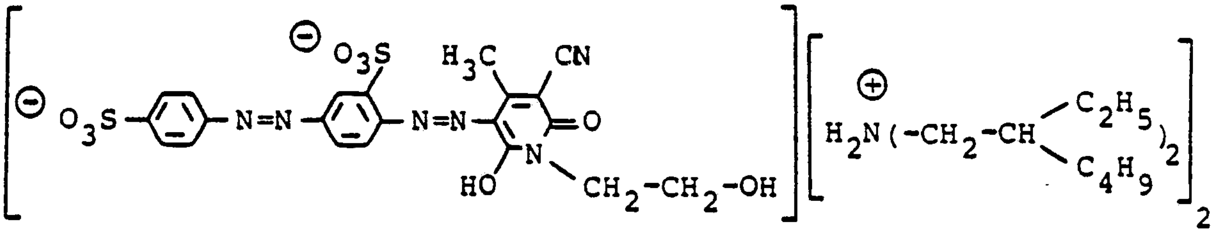

und löst sich in extremen Konzentrationen in Ethanol, Ethanol/Essigester- und Ethanol/Methylethylketon-Gemischen mit oranger Farbe ($\lambda_{max.}$ = 460 nm). Das Farbsalz eignet sich ausgezeichnet zum Färben polymerer Massen wie Nitrocellulose, Copolymerisaten aus Styrol und Maleinsäureanhydrid. Polyvinylchlorid, Polyvinylbutyral, Schellack und sauer modifizierten Kolophoniumharzen. Die gefärbten Polymeren weisen auf Papier, Aluminium- oder Kunststoffolien als Trägermaterial sehr gute Licht-, Wasser- und Fettechtheiten auf.

Beispiel 22

22,6 Teile des Kupplungsproduktes aus 4-Aminoazobenzol-3,4'-disulfonsäure auf 1-(2-Hydroxiethoxiethyl)-3-cyan-4-methyl-2-hydroxipyridon-6 — nach den Herstellungsbedingungen des Beispiels 1 erhalten und als Di-Natriumsalz isoliert — werden in 500 Raumteilen Wasser gelöst und mit 200 Raumteilen Aceton und 24,5 Teilen di-2-ethylhexylamin bei 0°C verrührt. Dazu tropft man langsam 50 Raumteile Essigsäure zu bis pH = 4 und rührt über Nacht, wobei sich der Ansatz auf Raumtemperatur erwärmt. Der kristalline Farblack wird abgesaugt, zunächst mit 30%igem Aceton, dann mit Wasser gewaschen und bei 50°C im Vakuum getrocknet.

Das so erhaltene Ammoniumsalz der Formel

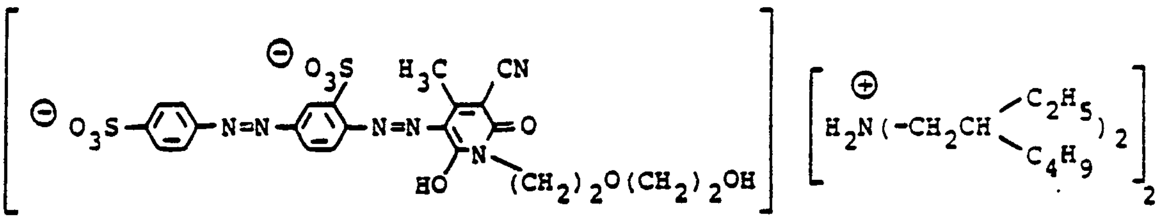

ist in sehr hoher Konzentration in Ethanol löslich ($\lambda_{max.}$ = 459,5 nm) und liefert im Flexodruck ausgezeichnete Echtheiten in allen üblichen Lacksystemen.

Beispiel 23

25,2 Teile des aus 4-Aminoazobenzol-3,4'-disulfonsäure und 2,6-Dihydroxi-3-cyan-pyridin gebildeten Azofarbstoffes als freie Säure werden mit 12 Raumteilen einer 10%igen Natronlauge in 450 Raumteilen Wasser und 300 Raumteilen Ethanol bei ph = 9 gelöst und mit 25 Teilen Di-2-ethylhexylamin bei −15°C verrührt. Das Reaktionsgemisch wird mit Impfkristallen und anschließend tropfenweise mit 30 Raumteilen Essigsäure bis pH = 4 vesetzt. Man rührt 2 Stunden unter Erwärmung auf 0°C nach, saugt ab, wäscht mit Eiswasser und trocknet bei 50°C im Vakuum. Das erhaltene Pulver der Formel

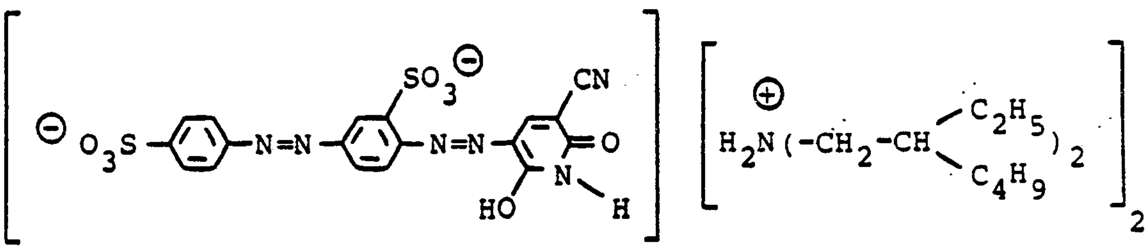

löst sich hervorragend in Ethanol mit oranger Farbe ($\lambda_{max.}$ = 462 nm) und liefert nach dem Flexoverfahren auf Allgro-Papier, Pergamin, Aluminium-Folien, Kraft-Papier und Zellstoff Drucke mit hervorragender Licht- und Fettechtheit.

Entsprechend den Beispielen 21 bis 23 werden die Farbsalze der Tabelle 2 erhalten, die sich hinsichtlich Anwendung und Eigenschaften sehr ähnlich verhalten:

TABELLE 2

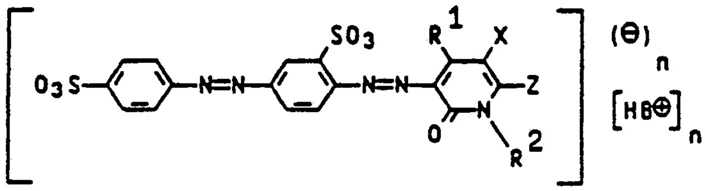

| Bsp. | $R^2$ | $R^1$ | X | Z | B | n | $\lambda_{max.}$ nm |
|---|---|---|---|---|---|---|---|
| 24 | $CH_2CH(OH)-CH_3$ | $CH_3$ | CN | OH | $HN[CH_2-CH(C_4H_9)(C_2H_5)]_2$ | 2 | 459,5 |
| 25 | $C_3H_6OH$ | $CH_3$ | CN | OH | " | 2 | 460,5 |
| 26 | $C_3H_6OC_4H_8OH$ | $CH_3$ | CN | OH | " | 2 | 460 |
| 27 | $C_4H_8OH$ | $CH_3$ | CN | OH | $NH[CH_2-CH(C_2H_5)(C_4H_9)]_2$ | 2 | 460 |
| 28 | H | $CH_3$ | CN | OH | $NH[CH_2-CH(C_2H_5)(C_4H_9)]_2$ | 2 | 459,5 |

Die Farbsalze der folgenden Tabelle 3 besitzen ähnliche Eigenschaften.

TABELLE 3

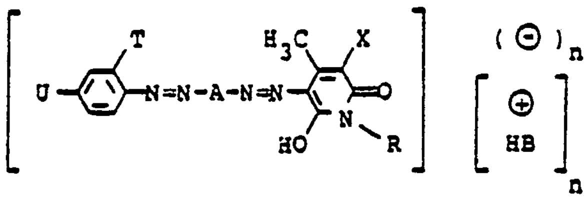

| Bsp. | T | U | A | X | R | B | n | λ max. nm |
|---|---|---|---|---|---|---|---|---|
| 29 | H | $SO_3$ | 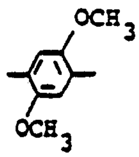 | CN | $C_3H_6OH$ | 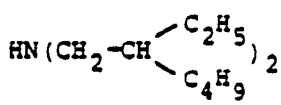 | 1 | 524,5 |
| 30 | $SO_3$ | $SO_3$ | 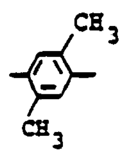 | CN | $C_3H_6OH$ | " | 2 | 482 |
| 31 | H | $SO_3$ | 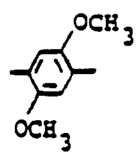 | CN | $C_2H_4OH$ | " | 1 | 524 |
| 32 | $SO_3$ | $SO_3$ | 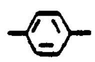 | CN | $C_2H_4OH$ | " | 2 | 467 |
| 33 | $SO_3$ | $SO_3$ | 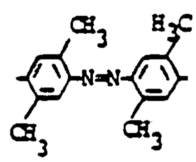 | CN | $C_2H_4OH$ | " | 2 | 487 |

Beispiel 34

30,9 Teile des aus 4-Amino-azobenzol-3,4'-disulfonsäure und N-(2'-Chlor)phenyl-5-pyrazolon-3-carbonsäuremethylester erhaltenen Azofarbstoffes werden in Form eines wasserfeuchten Filtergutes als Dinatriumsalz in 1000 Raumteilen 40%igem Aceton gelöst. Dazu tropft man unter Eiskühlung gleichzeitig 24,8 Teile Di-2-ethylhexylamin und 30%ige Essigsäure, so daß sich pH = 4 einstellt. Das zunächst harzartig anfallende Ammoniumsalz kristallisiert beim Rühren bei Raumtemperatur durch. Man saugt ab, wäscht mit Wasser und trocknet bei 60°C im Vakuum.

Das erhaltene Farbsalz der Formel:

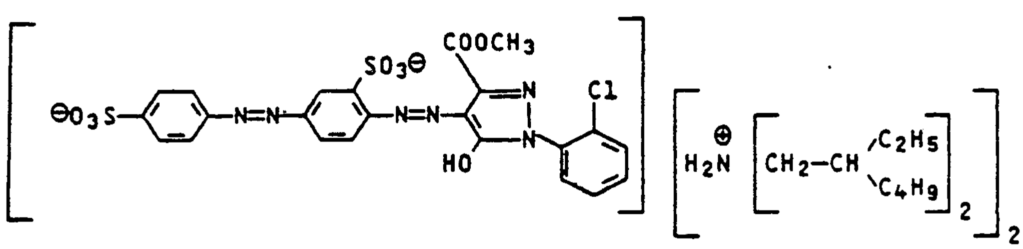

($\lambda_{max.}$ = 455,5 nm; Fp. 170/175°C) besitzt eine ausgezeichnete Löslichkeit in niedersiedenden Alkoholen und eignet sich hervorragend als Flexofarbstoff für orange Töne.

Nach dem Verfahren des Beispiels 34 sind, gegebenenfalls mit geringen Änderungen von Temperatur und Zeit, wie sie die Kristallisationsgeschwindigkeit im Einzelfall erfordert, die Farbstoffe der folgenden Tabelle zu erhalten, die ein sehr ähnliches Eigenschaftsprofil haben:

TABELLE 4

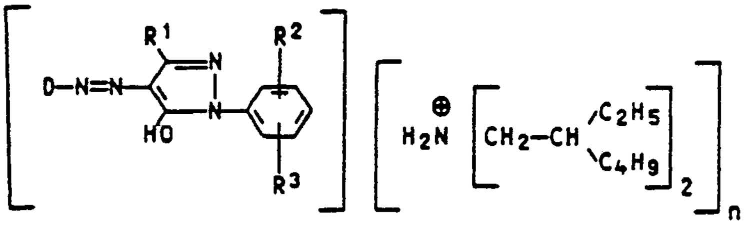

| Bsp. Nr. | D | $R^1$ | $R^2$ | $R^3$ | λ max. |
|---|---|---|---|---|---|
| 35 | 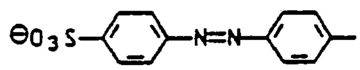 | $COOCH_3$ | H | H | 458,5 |
| 36 | ″ | $COOC_2H_5$ | H | H | 460 |
| 37 | ″ | $COOCH_3$ | 2'-Cl | 6'-Cl | 467,5 |
| 38 | 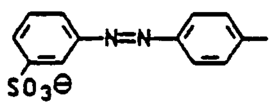 | $COOCH_3$ | 2'-Cl | H | 458 |
| 39 | 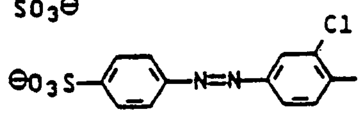 | $COOCH_3$ | $4'-SO_3^{\ominus}$ | H | 448 |
| 40 | 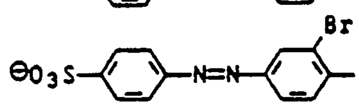 | ″ | ″ | H | 449,5 |
| 41 | 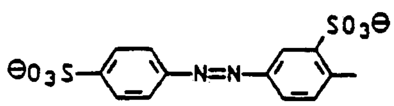 | $COOCH_3$ | H | H | 451,5 |
| 42 | 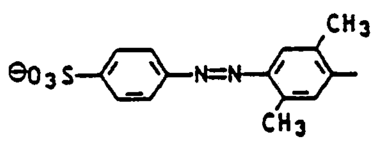 | $COOCH_3$ | 2'-Cl | H | 475 |
| 43 | 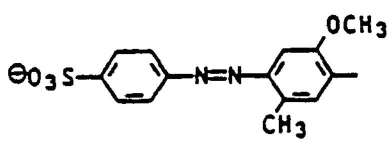 | $COOCH_3$ | 2'-Cl | $6'-CH_3$ | 498,5 |
| 44 | 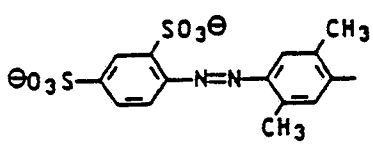 | $COOCH_3$ | H | H | 475,5 |
| 45 | 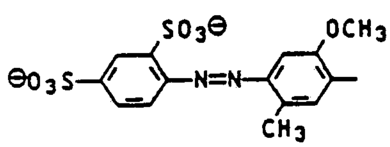 | $COOCH_3$ | H | H | 498,5 |
| 46 | 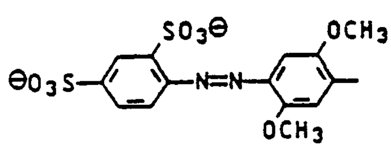 | $COOCH_3$ | H | H | 525 |

TABELLE 4 (Fortsetzung)

| Bsp. Nr. | D | $R^1$ | $R^2$ | $R^3$ | λ max. |
|---|---|---|---|---|---|
| 47 | 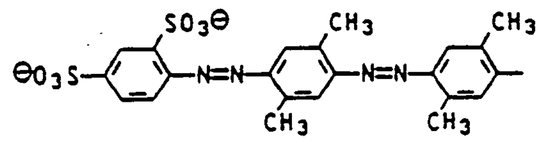 | $COOCH_3$ | H | H | 486 |
| 48 | " | $COOCH_3$ | 2'-Cl | H | 486,5 |
| 49 | " | $COOCH_3$ | 2'-Cl | 6'-$CH_3$ | 490 |

### Beispiel 50

0,5 Teile des Farbsalzes aus Beispiel 1 werden in 19,5 Teilen Styrol/Maleinsäure-Lack, bestehend aus 20% Harzanteil in einem Gemisch aus 72% Ethanol (99,5%) und 8% 1-Methoxi-propanol-2, bis zur vollständigen Lösung bei Raumtemperatur gerührt. Diese Druckfarbe wird mit einer Spiralrakel der Firma Erichsen GmbH und Co., Hermer-Sundwig/Westfalen, jeweils auf Allgro-Papier, Pergamin, Aluminiumfolie und Kraftpapier in einer Schichtdicke von 24 µm aufgezogen und getocknet. Die Lichtechtheiten nach DIN 54 004, die Wasserechtheiten nach DIN 53 991, Blatt 1, und die Fettechtheiten zeigen sehr gute Werte.

### Beispiel 51

0,5 Teile des Farbstoffes aus Beispiel 21 werden in 19,5 Teilen eines Nitrocellulose-Lackes, der aus 16,5% Nitrocellulose, 20,2% Ethylacetat und 63,3% Ethanol besteht, aufgelöst und entsprechend Beispiel 110 auf Pergamin, Allgro-Papier, Kraftpapier, Zellstoff und Aluminiumfolie aufgerakelt. Die brillanten, orangefarbenen Aufstriche zeichnen sich durch hervorragende Haftfestigkeit, Licht-, Wasser- und Fettechtheit aus.

### Beispiel 52

0,15 Teile des fein gepulverten Farbsalzes aus Beispiel 21 werden in eine Lösung von 25 Teilen Acetylcellulose in 75 Teilen Aceton gegeben und geschüttelt, bis eine echte Lösung vorliegt. Man preßt diese orangefarbene Lösung durch eine Düse und trocknet die Spinnfäden durch Heißluft im Gegenstrom. Das orange gefärbte Fadenmaterial weist sehr gute Licht-, Wasch-, Reib- und Thermofixierechtheit auf.

### Beispiel 53

Eine Zweischicht-Metallic-Lackierung von Aluminiumblech wird in zwei Schichten aufgebaut:

a) Basislack

58,3 Teile eines Polyacrylates, z.B. Luprenal® 8479, 60%ig, 26,5 Teile eines Melaminharzes, z.B. Luwipal® 012, 56%ig, 66,7 Teile Celluloseacetobutyrat (CAB 531—1) 15%ig in Butylacetat, 40 Teile BASF-Wachs SC 9625 10%ig in Xylol und 33 Teile einer Aluminiumbronze, z.B. Stapa® Metallux 157, 32%ig in Xylol werden in 120 Teilen Butylacetat gelöst. Diese Mischung hat eine Spritzviskosität von 15 bis 16 s. Man appliziert diese Mischung auf Aluminiumblech und läßt die Lösemittel bei Raumtemperatur abdampfen.

b) Decklack

49,5 Teile Luprenal 8479, 60%ig, 36,6 Teile Luwipal 015, 54%ig, 1,2 Teile Silikonöl A, 1%ig in Xylol, 1 Teil des Farbstoffs aus Beispiel 1 werden in 29,7 Teilen eines Aromatengemisches, z.B. Xylol/Solvesso® 100 8:2 gelöst. Diese Lösung hat eine Spritzviskosität von 22 s. Mittels Spritzpistole wird diese Lösung als 2. Schicht auf das vorbehandelte Aluminiumblech aufgetragen. Durch 30-minütiges Einbrennen bei 130°C wird der Lack ausgehärtet. Man erhält so eine leuchtend gelbe Lackierung mit guter Lichtechtheit.

**Patentansprüche**

1. Farbsalze anionischer Farbstoffe der Formel I

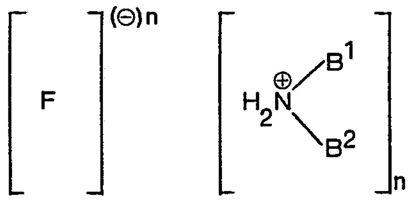

(I),

in der
n die Bedeutung von 1 oder 2,
$B^1$ und $B^2$ jeweils die Bedeutung des Restes

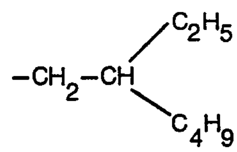

und

F die Bedeutung des Restes II oder III

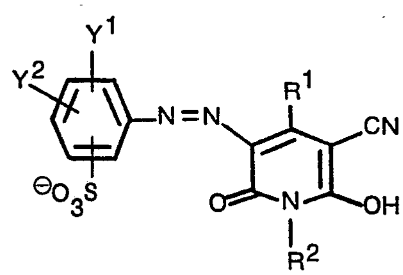

(II),

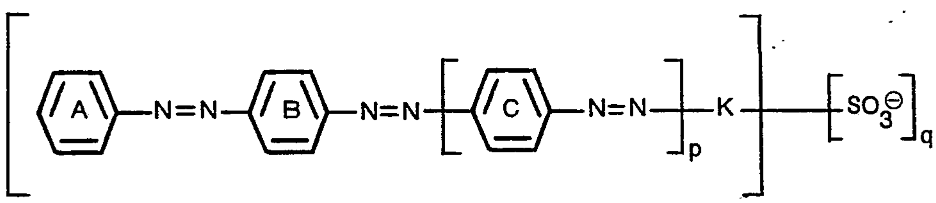

(III),

besitzen, wobei
die Ringe A, B und C noch substituiert sein können und
$R^1$ Wasserstoff, $C_1$- bis $C_3$-Alkyl, Hydroxi oder Hydroxisulfonylmethyl,
$R^2$ $C_1$- bis $C_8$-Alkyl, $C_2$- bis $C_7$-Hydroxialkyl oder $C_3$- bis $C_{11}$-Alkoxialkyl,
$Y^1$ Wasserstoff, Chlor, Brom, Methyl, Methoxi oder Hydroxisulfonyl,
$Y^2$ Wasserstoff, Chlor, Brom, Methyl oder Methoxi,
p 0 oder 1,
q 1 oder 2 und
K den Rest der Formel

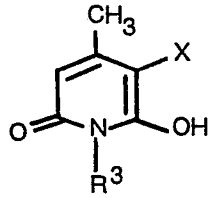

oder

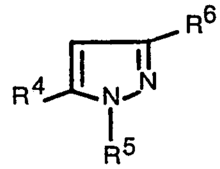

bedeuten, worin
X für Cyan oder Hydroxisulfonyl,
$R^3$ für Wasserstoff, $C_2$- bis $C_6$-Hydroxialkyl oder $C_4$- bis $C_8$-Hydroxialkoxialkyl,
$R^4$ für Methyl oder Hydroxi,
$R^5$ für Wasserstoff oder gegebenenfalls durch $Y^1$ und $Y^2$ substituiertes Phenyl und
$R^6$ für Methoxicarbonyl oder Ethoxicarbonyl stehen.

2. Verwendung der Farbsalze gemäß Anspruch 1 zum Färben von Lösungsmitteln, Drucktinten oder polymerer filmbildender Massen.

**Revendications**

1. Sels colorants de colorants anioniques de la formule I.

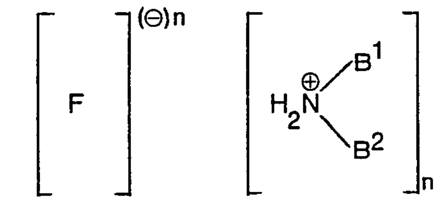 (I),

dans laquelle
n est = 1 ou à 2,
$B^1$ et $B^2$ représentent chacun le radical

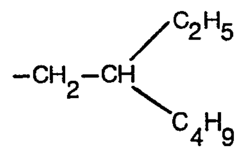 et

F représente le radical II ou III

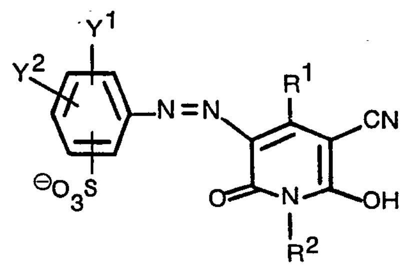 (II),

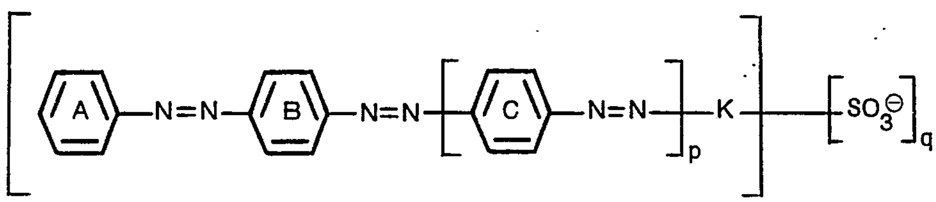 (III),

où les noyaux A, B et C peuvent encore être substitués et
$R^1$ représente un atome d'hydrogène, un radical alkyle en $C_1$ à $C_3$, hydroxyle ou hydroxysulfonyl méthyle,
$R^2$ représente un radical alkyle en $C_1$ à $C_8$, hydroxyalkyle en $C_2$ à $C_7$ ou alcoxyalkyle en $C_3$ à $C_{11}$,
$Y^1$ représente un atome d'hydrogène, un atome de chlore, de brome, un radical méthyle, méthoxy ou hydroxysulfonyle,
$Y^2$ représente un atome d'hydrogène, un atome de chlore, un atome de brome, radical méthyle ou méthoxy,
p est égal à 0 ou à 1,
q est égal à 1 ou à 2 et
K représente le radical de la formule:

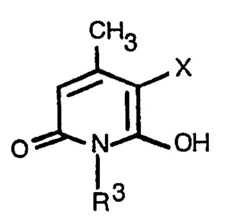 ou 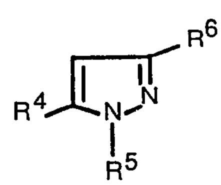

où
X représente un groupe cyano ou hydroxysulfonyle,
$R^3$ représente un atome d'hydrogène, un radical hydroxyalkyle en $C_2$ à $C_6$ ou hydroxyalcoxyalkyle en $C_4$ à $C_8$,
$R^4$ représente le radical méthyle ou hydroxyle,

$R^5$ représente un atome d'hydrogène, ou un radical phényle éventuellement substitué par $Y^1$ et $Y^2$ et $R^6$ représente un radical méthoxycarbonyle ou éthoxycarbonyle.

2. Utilisation de sels colorants suivant la revendication 1 pour la coloration de solvants, d'encres d'impression ou de matières polymères filmogènes ou feuillogènes.

**Claims**

1. A dye salt of an anionic dye of the formula I

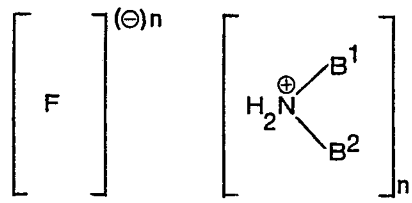

(I),

where n is 1 or 2, $B^1$ annd $B^2$ are each the radical

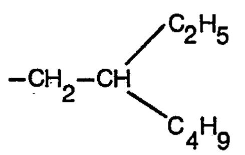

and F is the radical II or III

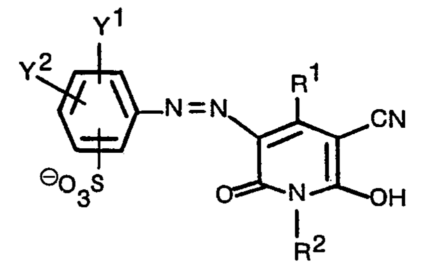

(II),

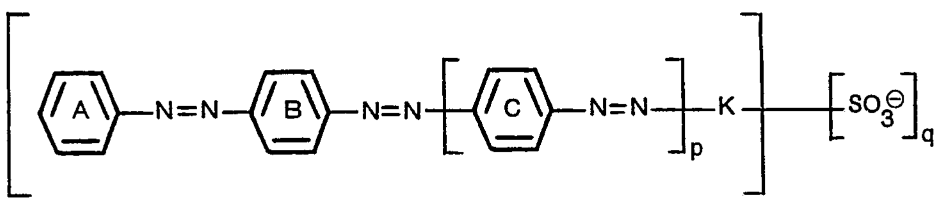

(III),

in which the rings A, B and C may furthermore be substituted and $R^1$ is hydrogen, $C_1$—$C_3$-alkyl, hydroxyl or hydroxysulfonylmethyl, $R^2$ is $C_1$—$C_8$-alkyl, $C_2$—$C_7$-hydroxyalkyl or $C_3$—$C_{11}$-alkoxyalkyl, $Y^1$ is hydrogen, chlorine, bromine, methyl, methoxy or hydroxysulfonyl, $Y^2$ is hydrogen, chlorine, bromine, methyl or methoxy, p is 0 or 1, q is 1 or 2 and K is a radical of the formula

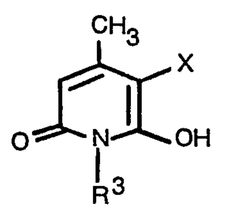

or

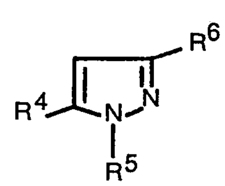

in which X is cyano or hydroxysulfonyl, $R^3$ is hydrogen, $C_2$—$C_6$-hydroxyalkyl or $C_4$—$C_8$-hydroxyalkoxyalkyl, $R^4$ is methyl or hydroxyl, $R^5$ is hydrogen or phenyl which is unsubstituted or substituted by $Y^1$ and $Y^2$ and $R^6$ is methoxycarbonyl or ethoxycarbonyl.

2. Use of a dye salt as claimed in claim 1 for dyeing solvents, printing inks or polymeric film-forming materials.